# EUROPEAN PATENT SPECIFICATION

(11) **EP 2 832 704 B1**
(45) Date of publication and mention of the grant of the patent: **24.07.2019**
(21) Application number: 13769996.3
(22) Date of filing: 13.03.2013
(51) Int. Cl.: C03B 40/033, C03B 23/025, C03C 8/16, C03C 8/04, C03C 17/00, C03C 17/04, C03C 27/10, C03C 8/22

(54) **CERAMIC COLOR PASTE, CERAMIC COLOR, GLASS HAVING CERAMIC COLOR**
KERAMIKFARBPASTE, KERAMIKFARBE, GLAS MIT KERAMIKFARBE
PÂTE DE COULEUR CÉRAMIQUE, COULEUR CÉRAMIQUE, VERRE POURVU DE COULEUR CÉRAMIQUE

(30) Priority: 29.03.2012 JP 2012077760
(43) Date of publication of application: 04.02.2015
(73) Proprietor: Mitsuboshi Belting Ltd., Kobe-shi, Hyogo 653-0024 (JP)
(72) Inventor: HAYASHI, Yoko, Kobe-shi Hyogo 653-0024 (JP); KURODA, Kotaro, Kobe-shi Hyogo 653-0024 (JP); SUZUKI, Masafumi, Kobe-shi Hyogo 653-0024 (JP)
(74) Representative: Müller-Boré & Partner Patentanwälte PartG mbB
(86) International application number: PCT/JP2013/056991
(87) International publication number: WO 2013/146264

(56) References cited:
- JP-A- H02 248 339
- JP-A- H04 295 021
- JP-A- H06 183 784
- JP-A- S63 265 843
- US-A- 5 421 877
- US-A- 5 643 636
- US-A1- 2003 119 647
- US-A1- 2005 153 143
- US-A1- 2008 226 863
- US-B1- 6 287 996

## Description

### TECHNICAL FIELD

The present invention relates to a ceramic color paste and a ceramic color for coloring and forming various types of glass, for example, glass plates to be glass substrates for automobiles, by baking thereon, and relates to ceramic color-attached glass to which the ceramic color has been applied.

### BACKGROUND ART

Of glasses for automobiles, fixed windowpanes such as windshields, side glasses, rear glasses, sunroof glasses and the like are fixed on a car body with an organic adhesive. The peripheries of the glasses fixed to a car body are colored in black or dark gray for preventing the organic adhesive from being deteriorated by sunlight, for hiding any excessive adhesive around the bonded sites (outrunning adhesive), and for improving the design of the glasses, and further for reducing the sliding resistance and improving the design thereof in the case of sliding windowpanes such as door glasses. In general, such glasses for automobiles are produced according to a process that comprises screen-printing a ceramic color (black ceramic) paste formed of black pigment-containing fusible glass frit on the peripheral area of a flat glass plate cut in a predetermined shape, then bending and forming the glass plate by heating while simultaneously baking the ceramic color paste on the glass plate, and thereafter conducting annealing or quenching and strengthening.

Recently, as the production mode of a bending and forming method for windowpanes for automobiles, there is employed a bending and forming system using a pressing machine provided in a heating furnace, for improving the productivity and the bending and forming accuracy. However, when such a pressing and forming method is applied to a high-temperature glass plate by the use of a conventional ceramic color paste, the ceramic color composition may adhere to the pressing mold (in general, the pressing mold has a heat-resistant cloth such as a glass cloth or the like provided on the surface thereof), and the productivity is thereby lowered due to deterioration in so-called mold releasability. On the other hand, for improving the mold releasability, a method of applying a mold release agent onto the surface of the ceramic color composition or onto the surface of the pressing mold would be effective; however, it increases the number of the steps and therefore is economically insufficient.

On the other hand, a laminated glass is a type of glass produced by bonding under pressure two glass plates via an interlayer film of a resin put therebetween, for improving safety, security, sound-proofness, light-proofness, design thereof and the like. Such a laminated glass is curved and processed depending on the intended use thereof; and for example, for windshields for automobiles and the like, used is a laminated glass having a predetermined curvature. A laminated glass for windshields for automobiles comprises an out-car glass plate that faces outside of automobiles (hereinafter referred to as "outer plate"), an in-car glass plate that faces inside of automobiles (hereinafter referred to as "inner plate"), and an interlayer film of resin provided between the outer plate and the inner plate. Further, between the outer plate and the interlayer film, a ceramic color is provided on the peripheral edge of the inside face of the outer plate.

Precisely, the ceramic color to be provided between two sheets of glass of a laminated glass is, in a step of producing the laminate glass, fused and fixed on the surface of a glass by heating the ceramic color paste printed on the glass plate at a temperature of the melting temperature thereof or higher and sintering the ceramic color paste. However, for the laminated glass, two sheets of glass are bent and formed nearly at the same curvature, and therefore, in general, the two sheets of glass are joined and bent and formed simultaneously. Consequently, the ceramic color printed on the outer plate also adheres to the inner plate, and after worked, the two glass plates could not be separated. For preventing such adhesion, in general, a release agent may be applied on the inner plate but it could not be sufficient. When the amount of the release agent applied is too large, the release agent may mix in the ceramic color and worsen the performance thereof.

In order to solve these problems, various methods have been proposed as a means of preventing ceramic color adhering.

JP-A 2002-362940 (PTL 1) discloses a ceramic color composition containing crystallizing-type lead-free glass frit capable of crystallizing during firing. In this reference, the mold releasability of a glass plate from a metallic pressing mold used in a pressing method is improved by the use of the ceramic color composition.

US Patent 4,596,590 (PTL 2) discloses a method of facilitating release of a ceramic paint layer from a die, in which a low-valent metal oxide powder, for example, copper(I) oxide is added to a ceramic paint composition so as to form a non-adhesive barrier on the contact surface that faces a molding die coated with fiberglass.

Further, in US Patent 4,684,389 (PTL 3), 4,857,096 (PTL 4) and 5,037,783 (PTL 5), there is disclosed a method of facilitating release of a ceramic paint layer from a die, in which a metal powder of finely-divided zinc or the like is added to a ceramic paint composition so as to form a metal oxide barrier through oxidation of the metal powder by heating. These references do not describe the particle size of the metal powder.

However, these ceramic color pastes could be effective in some degree for improving the mold releasability of a pressing mold (molding die), but are not satisfactory. In particular, the effect is insufficient in a production method where two sheets of glass are joined and bent and formed simultaneously.

US Patent 5,443,669 (PTL 6) proposes a method of securing the mold releasability between facing glass plates by reducing the adhesiveness during glass fusion, in which a silicate-based inorganic binder is incorporated in a ceramic color composition.

However, according to the method, a silicate-based inorganic binder is used and therefore the paste stability and printability is worsened.

JP-A 2008-179508 (PTL 7) discloses a laminated glass that comprises, for preventing adhesion of the two glass plates thereof, a black ceramic layer formed of fusible glass frit and, on the black ceramic layer, a conductive layer formed of fusible glass frit containing a silver powder as a metal for securing electroconductivity and for improving the crystallinity of the conductive frit. The reference says that the average particle size of the silver powder is preferably at most 20 µm and the content of the silver powder is from 50 to 90.9% by mass and preferably from 70 to 80% by mass relative to the total mass of the conductive frit.

The laminated glass could be effective in some degree for preventing adhesion under a specific condition; however, since a large amount of a silver powder is incorporated in the conductive layer, the performance and the color tone of the black ceramic layer may worsen owing to the influence of its diffusing during firing and the like. Further, it requires two-layer printing and requires incorporation of a large amount of expensive silver, and is therefore costly.

US 2008/226863 A1 and US 6 287 996 B1 also disclose paste compositions comprising a glass powder, a vehicle, heat resistant pigments and heat resistant particles.

Further, in production of a laminated glass for windshields for automobiles, a significant temperature profile may be provided in the glass surface to obtain a predetermined curvature in many cases, and the working temperature differs depending on the type of vehicle. However, according to the conventional technology, it is impossible to satisfy broad-range working conditions. Consequently, it is desired to provide a ceramic color paste (ceramic color composition) not being influenced by working conditions and not having any negative influence on the performance and the color tone of the ceramic color, and to provide a method for producing a laminated glass and a laminated glass.

### CITATION LIST

### PATENT LITERATURE

PTL 1: JP-A 2002-362940 (claim 1, paragraphs [0006], [0017], Examples)
PTL 2: US Patent 4,596,590 (claim 1, lines 45-62 in column 4, from column 5, line 56 to column 6, line 27)
PTL 3: US Patent 4,684,389 (claim 1, from column 4, line 62 to column 5, line 11)
PTL 4: US Patent 4,857,096 (claim 1, lines 35-49 in column 5)
PTL 5: US Patent 5,037,783 (claim 1, lines 35-49 in column 5)
PTL 6: US Patent 5,443,669 (claims 1, 4 and 5)
PTL 7: JP-A 2008-179508 (claim 1, paragraphs [0061], [0063], Examples)
PTL 8: US 2008/226863 A1 (claims 1, 9 and 13)
PTL 9: US 6 287 996 B1 (claims 1, 7, 15 and 16)

### SUMMARY OF THE INVENTION

### PROBLEM TO BE SOLVED BY THE INVENTION

Accordingly, an object of the present invention is to provide a ceramic color paste and ceramic color with which glass plates can be bent and formed in a simplified manner without detracting from the performance and color tone of the ceramic color; a ceramic color-attached glass and laminate glass provided with the ceramic color.

Another object of the present invention is to provide a ceramic color paste and ceramic color capable of preventing the ceramic color from adhering to a pressing mold and to facing glass plates and capable of being easily released from a pressing mold and facing glass plates after firing; a ceramic color-attached laminate glass provided with the ceramic color; and a method for producing it.

### SOLUTION TO PROBLEM

The present inventors have assiduously studied for solving the above-mentioned problems and, as a result, have found that, when large-diameter heat-resistant particles having a particle size larger than the thickness of the dried coating film for forming a ceramic color are incorporated, glass plates can be bent and formed in a simplified manner without detracting from the performance and color tone of the ceramic color, and have completed the present invention.

That is, the ceramic color paste according to the present invention contains a glass frit, a vehicle, a heat-resistant pigment and a large-diameter heat-resistant particle, in which the large-diameter heat-resistant particle has a particle size larger than the average thickness of a dried coating film for forming a ceramic color. The large-diameter heat-resistant particle may contain a particle having a particle size of from 1.2 to 20 times the average thickness. The large-diameter heat-resistant particle may have a proportion of from 0.1 to 30 parts by mass relative to 100 parts by mass of the total of the glass frit and the heat-resistant pigment. The large-diameter heat-resistant particle may have the same color or the same type of color as that of the ceramic color. The large-diameter heat-resistant particle may be formed of a metal oxide. The large-diameter heat-resistant particle may be formed of a glass. The large-diameter heat-resistant particle may be nearly spherical. The large-diameter heat-resistant particle may have a melting point or a softening point higher than the firing temperature of the ceramic color paste. The ceramic color paste according to according to the present invention may be arranged between facing glass plates of a laminated glass having a curved shape.

The present invention also includes a ceramic color produced by firing the ceramic color paste.

The present invention also includes a ceramic color-attached glass containing a glass plate having a curved shape, and a ceramic color film formed of the ceramic color and laminated on at least a part of at least one surface of the glass plate. The large-diameter heat-resistant particle protrudes from the surface of the ceramic color film.

The present invention also includes a ceramic color-attached laminated glass containing at least two glass plates bonded under pressure via an interlayer film formed of a resin, in which at least one of the glass plates is the ceramic color-attached glass plate. In the laminated glass, at least a part of the portion at which the large-diameter heat-resistant particle protrudes may be embedded in the interlayer film.

The present disclosure also includes a method for producing a ceramic color-attached glass, containing a laminating step of laminating the ceramic color paste on at least a part of at least one surface of a glass plate, and a bending and forming step of heating the resulting laminate at a temperature of the softening point of the glass plate or higher and bending and forming it and simultaneously firing the ceramic color paste. In the bending and forming step, bending and forming may be performed without using a release agent. The bending and forming step may include press forming. In the bending and forming step, multiple glass plates may be joined, bent and formed, and the ceramic color paste may be laminated on at least one surface of the facing surfaces of the multiple glass plates.

In this description, "the same type of color" means that, of the three elements to express the characteristics of color, or that is, of hue, brightness and saturation thereof, the hue is close to each other. "Bonding under pressure" is meant to indicate a treatment (step) of preparing laminated glass by heating and pressurizing laid-up glass intermediates, by using an autoclave or the like. "Adhesion" means undesirable adhesion between glass plates, or means undesirable adhesion of a ceramic color to a glass-forming mold (pressing mold).

### ADVANTAGEOUS EFFECTS OF INVENTION

In the present invention, a large-diameter heat-resistant particle having a particle size larger than the thickness of the dried coating film for forming a ceramic color is incorporated in the ceramic color paste. Therefore, when the ceramic color paste is used in bending and forming glass plates, it is possible to bend and form the glass plates in a simplified manner without detracting from the performance and color tone of the ceramic color in the bending and forming step in which firing of the bent and formed structure of the glass plates and the ceramic paste and the ceramic color paste is simultaneously conducted. Further, the obtained ceramic color is integrated (bonded under pressure) with the glass plates through lamination, while not adhering to the pressing mold and the other glass plate (facing glass plate), and after bending and forming, the glass plates can be readily separated from the pressing mold and from the facing glass plate. In particular, it is especially useful in the laminated glass since adhesion between the laminated glass plates after firing does not occur and they can be readily separated. Further, using the ceramic color paste of the present invention provides excellent printability and improved paste stability.

### BRIEF DESCRIPTION OF DRAWINGS

FIG. 1 is a schematic view illustrating a production step for a laminated glass having a curved shape of the present invention.
FIG. 2 is a schematic cross-sectional view of a dried coating film of the ceramic color paste obtained in Examples.
FIG. 3 is a microscope photograph (15-fold magnification) of a dried coating film surface of the ceramic color paste obtained in Example 14.
FIG. 4 is a microscope photograph (15-fold magnification) of the surface of the separated ceramic color film obtained in Example 14.

### MODES FOR CARRYING OUT THE INVENTION

### [Ceramic Color Paste]

The ceramic color paste (or ceramic color composition) of the present invention contains a large-diameter heat-resistant particle in addition to a glass frit, a vehicle and a heat-resistant pigment.

### (Large-Diameter Heat-Resistant Particle)

In the ceramic color paste of the present invention, a large-diameter heat-resistant particle (hereinafter this may be referred to as "large-diameter particle" or "large particle") has a particle size larger than the average thickness of the dried coating film (thickness of the coating film after dried) for forming a ceramic color, and therefore, when it is laminated (applied or printed) on a glass plate (single-layer glass plate or one glass plate of a laminated glass) and dried, the large-diameter heat-resistant particle protrudes from the surface of the coating film to form a convex structure. Consequently, the large-diameter heat-resistant particle acts as a spacer in firing the ceramic color, and hold a constant distance between the ceramic color and the facing glass or the pressing mold (molding die) to be in contact therewith, thereby preventing the molten glass in the ceramic color coating film from attaching and adhering to the facing glass.

The shape of the large-diameter particle (large particle) is isotropic (e.g., nearly spherical, cubic) since protrusions can be uniformly formed on the coating film surface. Nearly spherical shapes are more preferred from the viewpoint that the contact area with the surface of the facing glass or pressing mold (pressing surface) is small and the contact transfer by the spacer itself is also small. The large-diameter particle is preferably a primary particle (independent monolithic particle or single-layer particle), but may also be a secondary particle formed through aggregation of small particles so far as it can exist stably.

The particle size of the large-diameter particle (particle size measured with an electronic microscope or with a microscope having any other length-measuring function; for anisotropic shaped one, an average diameter of the long diameter and the short diameter) may well be larger than the average thickness of the dried coating film for forming a ceramic color. For example, relative to the average thickness, it preferably contains a particle having a particle size of about from 1.1 to 30 times, and for example, it may contain a particle having a particle size of from 1.2 to 20 times, preferably from 1.5 to 15 times, and more preferably from 2 to 10 times (particularly from 2 to 8 times).

In this description, the average thickness of the dried coating film with the large-diameter particle means the average thickness in the region except the protrusions formed of the large-diameter particle on the surface of the coating film.

The particle size of the large-diameter particle (large particle) may be selected in accordance with the thickness of the dried coating film in the manner as above, and is 80 µm to 300 µm.

The maximum particle size of the large-diameter particle (large particle) may be 300 µm or less (e.g., from 200 to 300 µm), for example, 200 µm or less (e.g., from 150 to 200 µm), and preferably 150 µm or less (e.g., from 100 to 150 µm). When the maximum particle size of the large-diameter particle is too large, the film after fired may lose flatness, and may have some negative influence (inclusion of bubbles) on thermal fusion with an interlayer film. Further, in case where the ceramic color paste is screen-printed, the maximum diameter of the large-diameter particle may be 120 µm or less (e.g., from 80 to 120 µm), preferably 100 µm, and 80 µm at the least. When the maximum particle size is more than 120 µm, the large-diameter particle could not pass through the aperture of the screen plate and the printing accuracy may often lower.

The large-diameter particle (large particle) may be used one type thereof alone, but may also be used by combining two or more different types thereof different in the particle size or two or more different types thereof different in the material. The large-diameter particle is not specifically limited in point of the particle size distribution thereof, and may contain the large-diameter particle of the above-mentioned particle size range, however, the particle size distribution thereof is preferably narrower. The standard deviation of the particle size distribution is about 20 µm or less (e.g., from 1 to 15 µm), preferably 10 µm or less (e.g., from 1 to 10 µm), and more preferably 5 µm or less (e.g., from 1 to 5 µm).

In this description, the method for measuring the particle size and the particle size distribution of the large-diameter particle is not specifically limited. For example, employable here is any known measuring method using a laser diffraction particle sizer or the like (especially, the screening test method of JIS R6002).

In order to maintain their shape after fired and form protrusions on the surface of the coating film to function as a spacer, and therefore the large-diameter particle preferably has a melting point or a softening point higher than the firing temperature of the ceramic color paste. The melting point or the softening point of the large-diameter particle may be, for example, 600°C or more, preferably 650°C or more (e.g., from 650 to 2000°C), and more preferably 700°C or more (e.g., from 700 to 2000°C). When the melting point or the softening point is too low, the large-diameter particle may melt or deform during bending and forming, and if so, the molten glass in the ceramic color paste would readily come into contact with and adhere to the facing glass plate or the pressing mold.

The material having such a high melting point or softening point is preferably an inorganic material, and for example, the inorganic material having a softening temperature of 600°C or higher includes soda glass (soda lime glass or soda lime silica glass), crown glass, barium-containing glass, strontium-containing glass, boron-containing glass, low alkali glass, alkali-free glass, crystallized transparent glass, silica glass, quartz glass, heat-resistant glass, etc. The inorganic material having a melting point of 600°C or higher includes, for example, boron compounds (boron carbide, boron nitride, etc.), nitrogen compounds (titanium nitride, etc.), silicon compounds (silica, silicon carbide, etc.), metal oxides (manganese oxide, copper oxide, iron oxide, chromium oxide, cobalt oxide, titanium oxide, iron oxide, ruthenium oxide, lanthanum oxide, aluminium oxide, composite metal oxides thereof, etc.), metal hydroxides (aluminium hydroxide, calcium hydroxide, magnesium hydroxide, etc.), carbonates (magnesium carbonate, calcium carbonate, etc.), simple metals (aluminium, iron, silver, copper, etc.), ceramics (zeolite, alumina, zirconia, forsterite, mullite, etc.), etc. These inorganic materials may be used either singly or as combination of two or more thereof. Of those inorganic materials, widely used are glass (soda glass, etc.) and metal oxides from the viewpoint that they are excellent in stability in firing and can prevent color deterioration owing to reflection.

In the present invention, the large-diameter particle has a large particle size and can efficiently prevent adhesion of the ceramic color to the facing glass or to the pressing mold even when the amount thereof is small, and therefore, its influence on the optical properties, color appearance and color tone of the ceramic color is small. For further reducing the influence on the optical properties, color appearance and color tone of the ceramic color, the inorganic material is preferably a transparent glass or an inorganic material having the same color or the same type of color as the ceramic color, and more preferred is an inorganic material having the same color or the same type of color as the ceramic color. The inorganic material having the same color or the same type of color as the ceramic color includes metal oxides such as chromium oxide, manganese dioxide, etc.; heat-resistant pigments to be mentioned below (a large-diameter particle formed of the inorganic material to constitute a heat-resistant pigment), etc. For example, in case where the ceramic color is a black ceramic of black color, the large-diameter particle may be those of a black metal oxide such as chromium oxide, manganese dioxide or the like, or copper-chromium composite oxide, iron-manganese composite oxide or the like that is used as a heat-resistant pigment.

The proportion of the large-diameter particle may be selected from the range of from 0.01 to 30 parts by mass or so relative to 100 parts by mass of the total of the glass frit and the heat-resistant pigment. For example, it may be from 0.1 to 20 parts by mass, preferably from 0.3 to 15 parts by mass, and more preferably from 0.5 to 10 parts by mass (especially from 1 to 5 parts by mass) or so. When the proportion of the large-diameter particle is too small, the spacer effect may lower owing to deformation or destruction of the large-diameter particle during bending and forming, and therefore the adhesion-preventing effect may also lower easily. On the other hand, when the proportion of the large-diameter particle is too large, the strength of the ceramic color film may lower and, owing to aggregation of the large-diameter particles, adhesion and transfer may tend to occur. That is, they may bond to each other, or when the ceramic color paste is melted by heating, the large-diameter particles existing near to each other may be integrated with each other since the low-melting point glass existing on the surface of the large-diameter particles melts, and accordingly, they may readily adhere or transfer to the facing glass plate or the pressing mold.

### (Glass Frit)

Glass frit (melting glass power or particles) is incorporated for forming a ceramic color film and for fixing onto a glass plate. As the glass frit, usable is any ordinary glass frit in ceramic colors, for example, borosilicate glass frit, zinc borosilicate glass frit, bismuth glass frit, lead glass frit, etc. These glass frits may be used either singly or as combination of two or more thereof.

The softening point of the glass frit may be, for example, lower than the heating temperature in bending and forming, and may be selected, for example, from a range of from 350 to 700°C or so, for example, from 360 to 650°C, preferably from 380 to 600°C, and more preferably from 400 to 580°C (especially from 410 to 550°C) or so.

The average particle size of the glass frit may be, for example, from 0.1 to 10 µm, preferably from 0.3 to 8 µm, and more preferably from 0.5 to 5 µm (especially from 1 to 4 µm) or so. When the particle size of the glass frit is too large, the printability and fired film uniformity may worsen, and in screen printing, clogging may readily occur. On the other hand, when the particle size is too small, the dispersibility of the glass frit lowers and therefore the printability with the ceramic color paste may lower and the economic potential may also lower.

The proportion of the glass frit may be selected from a range of about from 30 to 95% by mass relative to the total of the ceramic color paste, and is, for example, from 40 to 95% by mass, preferably from 45 to 80% by mass, and more preferably from 50 to 75% by mass (especially from 50 to 70% by mass) or so. When the proportion of the glass frit is too large, the color tone of the ceramic color may worsen; but when too small, the pressure-bonding performance to a glass plate may lower.

### (Vehicle)

The vehicle is incorporated so as to make the ceramic color composition pasty to be applicable to the coating step of screen printing or the like. The vehicle may be any ordinary vehicle generally used as a vehicle for ceramic colors, and may be, for example, a dispersion medium and/or a binder. The vehicle may be any of a dispersion medium or a binder, but preferably at least contains a dispersion medium from the viewpoint that the dispersion medium can vaporize by drying to thereby make the large-diameter particle protrude from the surface, and in general, is a combination of a dispersion medium and a binder.

Examples of the dispersion medium widely used include aliphatic alcohols (e.g., saturated or unsaturated C₆₋₃₀ aliphatic alcohols such as 2-ethyl-l-hexanol, octanol, decanol, etc.), cellosolves (C₁₋₄ alkyl cellosolves such as methyl cellosolve, ethyl cellosolve, butyl cellosolve, etc.), cellosolve acetates (C₁₋₄ alkyl cellosolve acetates such as ethyl cellosolve acetate, butyl cellosolve acetate, etc.), carbitols (C₁₋₄ alkyl carbitols such as methyl carbitol, ethyl carbitol, propyl carbitol, butyl carbitol, etc.), carbitol acetates (C₁₋₄ alkyl cellosolve acetates such as ethyl carbitol acetate, butyl carbitol acetate, etc.), aliphatic polyalcohols (e.g., ethylene glycol, diethylene glycol, dipropylene glycol, 1,4-butanediol, triethylene glycol, glycerin, etc.), alicyclic alcohols [e.g., cycloalkanols such as cyclohexanol, etc.; terpene alcohols (e.g., monoterpene alcohols, etc.), such as terpineol, dihydroterpineol, etc.], aromatic carboxylates (di-C₁₋₁₀ alkyl phthalates such as dibutyl phthalate, dioctyl phthalate, etc.), di-C₁₋₁₀ alkylaralkyl phthalates such as dibutylbenzyl phthalate, etc.), etc. These dispersion mediums can be used either singly or as combination of two or more thereof.

The boiling point of the dispersion medium may be such that the volatility thereof at room temperature is low but can readily vaporize without melting the glass frit. For example, it is about from 50 to 250°C, preferably from 70 to 220°C, and more preferably from 80 to 200°C.

Of those dispersion mediums, especially preferred are alicyclic alcohols such as terpineol, etc., C₁₋₄ alkyl cellosolve acetates such as butyl carbitol acetate, etc.; di-C₁₋₁₀ alkyl phthalates such as dibutyl phthalate, etc., from the viewpoint that they have a suitable boiling point and can improve the flowability of and printability with the paste.

The binder includes an organic binder and an inorganic binder.

Examples of the organic binder include thermoplastic resins (olefinic resins, vinylic resins, acrylic resins, styrenic resins, polyester resins, polyamide resins, cellulose derivatives, etc.), thermosetting resins (thermosetting acrylic resins, epoxy resins, phenolic resins, unsaturated polyester resins, polyurethane resins, etc.), etc. These organic binders may be used either singly or as combination of two or more thereof.

Examples of the inorganic binder include silica sol, alumina sol, titania sol, zirconia sol, etc. These inorganic binders may be used either singly or as combination of two or more thereof.

Of those binders, widely used are organic binders (e.g., acrylic resins, styrenic resins, alkyl celluloses, phenolic resins, etc.); and from the viewpoint of the thermal degradability thereof, preferred are acrylic resins.

As the acrylic resin, for example, usable are alkyl (meth)acrylate resins and the like containing a (meth)acrylate unit as the polymerization component. Examples of the alkyl (meth)acrylates include C₁₋₁₀ alkyl (meth)acrylates such as methyl (meth)acrylate, ethyl (meth)acrylate, butyl (meth)acrylate, t-butyl (meth)acrylate, isobutyl (meth)acrylate, hexyl (meth)acrylate, octyl (meth)acrylate, 2-ethylhexyl (meth)acrylate, etc.

The alkyl (meth)acrylate resins may be copolymers of the above, or may be copolymers with any other copolymerizable monomer. Examples of the copolymerizable monomer include (meth)acrylic acid; aryl (meth)acrylates such as phenyl (meth)acrylate; hydroxy-C₂₋₆ alkyl (meth)acrylates such as hydroxyethyl (meth)acrylate, hydroxypropyl (meth)acrylate, etc.; glycidyl (meth)acrylates; N,N-dialkylaminoalkyl (meth)acrylates; (meth)acrylates having an alicyclic hydrocarbon group such as tricyclodecane, etc.; (meth)acrylonitrile; aromatic vinyl monomers such as styrene, etc. These copolymerizing monomers may be used either singly or as combination of two or more thereof.

The thermal decomposition temperature of the binder is, for example, from 200 to 500°C, preferably from 220 to 500°C, and more preferably from 220 to 400°C (especially from 220 to 350°C) or so.

The proportion of the vehicle relative to the total of the ceramic color paste, may be, for example, from 10 to 50% by mass, preferably from 15 to 45% by mass, and more preferably from 20 to 40% by mass (especially from 20 to 30% by mass) from the viewpoint of obtaining the intended viscosity and improving printability (coatability) with the paste. The proportion of the vehicle relative to 100 parts by mass of glass frit, may be, for example, from 10 to 100 parts by mass, preferably from 20 to 80 parts by mass, and more preferably from 30 to 70 parts by mass (especially from 40 to 60 parts by mass). When the proportion of the vehicle is too large, it would be difficult to prepare a coating film having a desired thickness; but when too small, the printability may worsen.

In the case where the vehicle is composed of a combination of a dispersion medium and a binder, the proportion of the binder is from 5 to 80% by mass, preferably from 10 to 50% by mass, and more preferably from 15 to 40% by mass (especially from 20 to 40% by mass) or so relative to the total of the vehicle.

### (Heat-Resistant Pigment)

The heat-resistant pigment is incorporated for imparting a desired color tone to the ceramic color. The heat-resistant pigment may be any one resistant to the firing temperature of the ceramic color paste, and any ordinary heat-resistant pigment is usable.

Examples of the heat-resistant pigment include black pigments (copper-chromium composite oxide, iron-manganese composite oxide, copper-chromium-manganese composite oxide, cobalt-iron-chromium composite oxide, magnetite, etc.), brown pigments (zinc-iron composite oxide, zinc-iron-chromium composite oxide), blue pigments (cobalt blue, etc.), green pigments (chromium green, cobalt-zinc-nickel-titanium composite oxide, cobalt-aluminium-chromium composite oxide, etc.), red pigments (red iron oxide, etc.), yellow pigments (titanium yellow, titanium-barium-nickel composite oxide, titanium-antimony-nickel composite oxide, titanium-antimony-chromium composite oxide, etc.), white pigments (titanium white, zinc oxide, etc.), etc. These heat-resistant pigments may be used either singly or as combination of two or more thereof.

The heat-resistant pigment may be selected in accordance with the intended color, and black heat-resistant pigments (e.g., composite oxide black such as copper-chromium-manganese composite) are widely used.

Regarding the shape of the heat-resistant pigment, examples thereof include nearly spherical, oval, polygonal (pyramidal, cubic, rectangular), tabular, rod-shaped, irregular and the like. Of those shapes, preferred are isotropic shapes (nearly spherical or the like) from the viewpoint of the dispersibility and the color tone thereof.

The average particle size of the heat-resistant pigment is, for example, from 0.1 to 10 µm, preferably from 0.2 to 5 µm, and more preferably from 0.3 to 4 µm (especially from 0.5 to 3 µm) or so. When the particle size of the heat-resistant pigment is too small, uniform dispersion would be difficult and therefore the coloration may worsen; but when too large, the coatability may worsen and the coloration may therefore worsen.

The proportion of the heat-resistant pigment relative to the total of the ceramic color paste is, for example, from 5 to 50% by mass, preferably from 10 to 40% by mass, and more preferably from 15 to 30% by mass (especially from 20 to 25% by mass) or so. The proportion of the heat-resistant pigment relative to 100 parts by mass of glass frit is, for example, from 10 to 100 parts by mass, preferably from 20 to 80 parts by mass, and more preferably from 30 to 70 parts by mass (especially from 35 to 60 parts by mass) or so. When the proportion of the heat-resistant pigment is too large, the strength of the ceramic color film may lower; but when too small, the coloration may worsen.

The ceramic color paste may contain a heat-resistant particle (a heat-resistant particle formed of the same material as that of the large-diameter heat-resistant particle) having a particle size not larger than the thickness of the dried coating film.

The ceramic color paste may contain any ordinary additives, for example, color tone improver, glossing agent, metal corrosion inhibitor, stabilizer (antioxidant, UV absorbent, etc.), surfactant or dispersing agent (anionic surfactant, cationic surfactant, nonionic surfactant, ampholytic surfactant, etc.), dispersion stabilizer, tackifier, viscosity regulator, moisturizer, thixotropy imparting agent, leveling agent, defoaming agent, microbicide, filler, etc. in accordance with the intended use thereof. These additives may be used either singly or as combination of two or more thereof.

As a method for preparing the ceramic color paste, usable is a method of mixing by the use of an ordinary mixing machine for uniformly dispersing the components. In the case where an apparatus having a grinding function (e.g., three-roll device, mortar, mill, etc.) is used, it is desirable that, for preventing the large-diameter particle from being ground, the other components than the large-diameter particle are mixed in the grinding function-having apparatus and then the large-diameter particle are added thereto.

The ceramic color of the present invention can be obtained by applying the ceramic color paste onto a glass plate, then drying and firing it. The ceramic color may be formed on a single-layer glass plate, or may be formed between the facing glass plates of a laminated glass. In the case where the glass plate is bent and formed in the present invention, mold releasability can be improved owing to the large-diameter particle protruding on the surface even when the glass frit in the ceramic color paste has melted, and consequently, bending and forming of the ceramic color paste and firing treatment of the ceramic color paste can be carried out at the same time in a simplified method. That is, even when the glass frit melts during bending and forming, the mold releasability between the pressing mold and the glass plate can be improved in the case where the ceramic color is formed on a single-layer glass plate, and in the case of laminated glass, the mold releasability between the glass plates can be improved. Of those cases, the ceramic color of the present invention is especially effective in the case of production of laminated glass in which the ceramic color may readily adhere or transfer to the facing glass plate in bending and forming operation.

### [Ceramic Color-Attached Glass and Method for Production thereof]

The ceramic color-attached glass of the present invention comprises a glass plate which has been bent and formed and has a curved shape, and a ceramic color film which is laminated at least a part of at least one surface of the glass plate and is formed of the above-mentioned ceramic color.

Examples of the glass plate include soda glass, borosilicate glass, crown glass, barium-containing glass, strontium-containing glass, boron-containing glass, low-alkali glass, alkali-free glass, crystallized transparent glass, silica glass, quartz glass, heat-resistant glass, etc. Of those glasses, widely used is alkali glass such as soda glass, etc.

The surface of the glass plate may be surface-treated through oxidation treatment [surface oxidation treatment such as discharge treatment (corona discharge treatment, glow discharge, etc.), acid treatment (chromic acid treatment, etc.), UV irradiation treatment, flame treatment, etc.], surface roughening treatment (solvent treatment, sand blasting treatment, etc.), etc.

The thickness of the glass plate may be suitably selected in accordance with the intended use thereof, and is, for example from 0.01 to 50 mm, preferably from 0.1 to 30 mm, and more preferably from 0.5 to 10 mm (especially from 1 to 5 mm) or so.

On the surface of the ceramic color film, the large-diameter heat-resistant particle may protrude out, and protrusion of the large-diameter particle improves the mold releasability from the pressing mold and the facing glass plate. The average height of the protrusions of the protruding large-diameter heat-resistant particles may be a height protruding from the surface of the ceramic color film by from 5 to 100 µm, preferably from 10 to 80 µm, and more preferably from 15 to 70 µm or so.

The average thickness of the ceramic color film (fired film) (the average thickness in the region excepting the protrusions formed of the large-diameter particles in the surface of the coating film) may be selected in accordance with the intended use thereof, and is, for example, from 1 to 80 µm, preferably from 5 to 40 µm, and more preferably from 8 to 25 µm (especially from 10 to 18 µm) or so.

The ceramic color-attached glass of the present invention can be produced according to a production method that includes a laminating step (A) of laminating the above-mentioned ceramic color paste on at least a part of at least one surface of a glass plate, and a bending and forming step (B) of heating the resulting laminate at a temperature of the softening point of the glass plate or higher and bending and forming it, and simultaneously firing the ceramic color paste.

In the lamination step (A), the ceramic color paste may be laminated entirely on at least one surface of a glass plate, but may be laminated on a part thereof. For a glass for automobiles, in general, it is laminated in the peripheral part thereof (around the entire periphery).

For a method for laminating a ceramic color paste, in general, usable is a lamination method by coating. Examples of the coating method (printing method) with the ceramic color paste include a flow coating method, a spin coating method, a spray coating method, a screen printing method, a flexographic printing method, a casting method, a bar coating method, a curtain coating method, a roll coating method, a gravure coating method, a slit method, a photolithographic method, an inkjet method, etc. Of those, preferred is a screen printing method. The printing may be single-layer printing or multilayer printing.

In the lamination step (A), the ceramic color paste applied is dried and forms a dried coating film in which large-diameter particles protrude on the surface thereof. The drying may be spontaneous drying, but preferred is drying by heating. The heating temperature may be selected in accordance with the type of the dispersion medium, and is, for example, from 50 to 250°C, preferably from 80 to 200°C, and more preferably from 100 to 180°C (especially from 120 to 160°C) or so. The heating time is, for example, from 1 minute to 3 hours, preferably from 3 minutes to 1 hour, and more preferably from 5 to 30 minutes or so.

From the obtained dried coating film, the dispersion medium evaporates, and therefore on the surface of the coating film, the large-diameter heat-resistant particles protrude out. Consequently, in the next step, even when the glass frit is melted by firing the dried coating film, the molten glass frit contained in the ceramic color film is prevented from coming contact with the pressing mold and the facing glass plate, and therefore the pressing mold and the facing glass may be readily separated from the glass plate.

The average thickness of the dried coating film (the average thickness in the region excepting the protrusions formed of the large-diameter particles in the surface of the coating film) may be selected in accordance with the intended use, and is, for example, from 1 to 100 µm, preferably from 5 to 50 µm, and more preferably from 10 to 30 µm (especially from 12 to 20 µm) or so.

In the bending and forming step (B), shown is an example of forming the obtained laminate (glass plate) simultaneously with firing the ceramic color paste. However, depending on the bending and forming condition, the ceramic color paste may be pre-fired, and after the ceramic color paste is fired, the bending and forming may be conducted.

As for the method of bending and forming the laminate, usable is an ordinary bending and forming method. In the case of a forming method using a pressing mold, in general, a bending and forming is conducted by employing a pressing mold in which the pressing surface (contact surface) thereof is coated with a fabric formed of heat-resistant fibers (e.g., metal fibers, glass fibers, etc.). In a method of producing laminated glass, facing glass plates are laminated and then bent and formed.

In bending and forming operation, a glass plate is given a predetermined curvature by utilizing an ordinary bending and forming method with heat treatment. The bending and forming method includes, for example, a self-weight bending method, a pressing method using a pressing mold (e.g., a metallic pressing mold coated with the above-mentioned fabric on the contact surface thereof), etc.

The heating temperature for bending and forming and firing may be a temperature not lower than the softening point of the glass plate, and is, for example, from 550 to 750°C, preferably from 570 to 700°C, and more preferably from 580 to 680°C or so.

An ordinary release agent may be given to the interface between the ceramic color film and the pressing mold or the facing glass, but in the present invention, without using a release agent, the glass plate can be readily separated from the pressing mold or the facing glass. Consequently, from the viewpoint of preventing the ceramic color performance from being degraded owing to contamination with a release agent, it is desirable that a release agent is not used.

Of those ceramic color-attached glass plates, preferred is a laminated glass from the viewpoint that adhesion or transfer to the facing glass are readily occur and therefore the effect of the ceramic paste of the present invention is remarkable.

### (Laminated Glass and Method for Production thereof)

The laminated glass of the present invention comprises the above-mentioned ceramic color arranged between the facing glass plates therein, in which, precisely, at least two glass plates are bonded to each other under pressure via an interlayer film formed of a resin therebetween, at least one glass plate is the above-mentioned ceramic color-attached glass plate, and another glass plate is bonded under pressure to the side of the ceramic color film formed via the interlayer film. The laminated glass of the present invention can be obtained according to an ordinary production method that includes a bending step of bending and forming multiple glass plates laminated via a ceramic color paste therebetween and simultaneously firing the ceramic color paste.

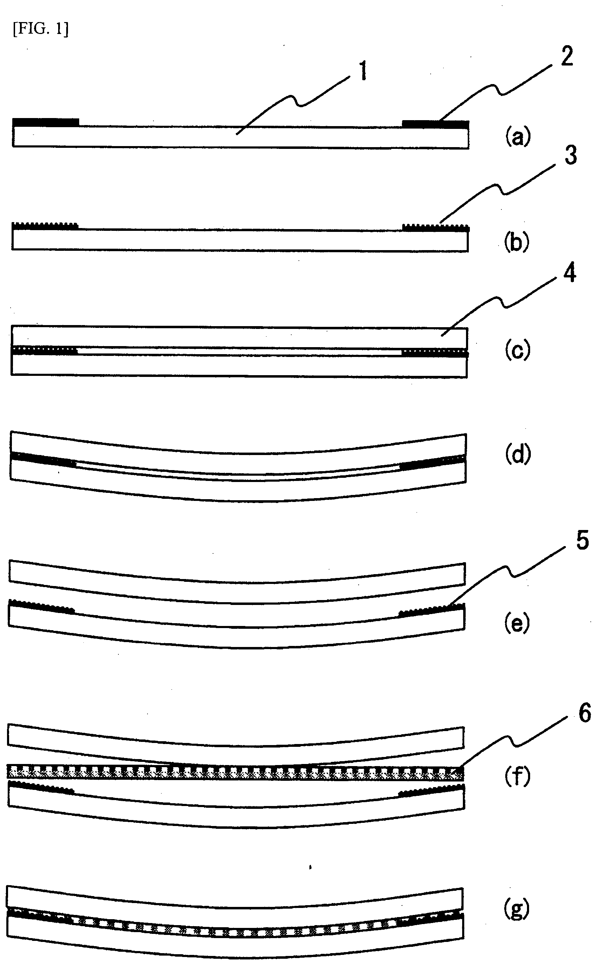

The production method for a laminated glass of the present invention is described below with reference to the drawings. FIG. 1 is a schematic view illustrating a production step for a laminated glass having a curved shape of the present invention.

As illustrated in FIG. 1, the laminated glass of the preset invention can be obtained through a coating step (a) of applying a ceramic color paste 2 onto the peripheral area of a first glass plate 1, a drying step (b) of drying the applied ceramic color paste 2 to form a dried coating film 3 with a large-diameter particle protruding out from the surface thereof, a facing glass plate-laminating step (c) of laminating a second glass plate (facing glass plate) 4 on the ceramic color paste-coated surface, a bending and forming step (d) of bending and forming the laminated glass plates and simultaneously firing the dried coating film 3, a separating step (e) of separating the glass plates laminated via the fired ceramic color 5, a laying up step (f) of arranging a resinous interlayer film 6 between the separated glass plates, and a pressure-bonding step (g) of bonding the first glass plate and the second glass plate under pressure.

The coating step (a) and the drying step (b) correspond to the above-mentioned laminating step (A). In the coating step (a), the above-mentioned glass plate may be used as the glass plate, and for the method of applying the ceramic paste to the glass plate, usable is the above-mentioned method.

In the drying step (b), the above-mentioned method may be used for the drying method. By drying, the large-diameter particle protrudes out of the surface of the coating film, and in the next step, even when the glass frit is melted by firing the dried coating film, the molten glass frit contained in the ceramic color film is prevented from coming into contact with the second glass plate, and therefore the second glass plate can be readily separated from the first glass plate.

In the facing glass plate-laminating step (c), for the second glass plate, usable is the glass material exemplified for the first glass plate. The thickness thereof may be also selected from the same thickness as that of the first glass plate. The second glass plate may be formed of a different material and/or may have a different thickness from that of the first glass plate.

An ordinary release agent may be given to the second glass plate for improving the mold releasability from the first glass plate; however, in the present invention, without using a release agent, the second glass plate can be readily separated from the first glass plate. Consequently, from the viewpoint of preventing the ceramic color performance from being degraded owing to contamination with a release agent, it is desirable that a release agent is not used.

In the bending step (d), the glass is heated up to a temperature of the softening point thereof or higher, by which nearly the same, predetermined curvature is given to the first glass plate and the second glass plate. As the bending and forming method, usable is the above-mentioned method. While the glass plates are bent and formed, the ceramic color paste is simultaneously sintered (fired) at the above-mentioned heating temperature and melted and fixed on the surface of the first glass plate.

In the separating step (e), the laminated glass plates that have been heated by the previous bending and forming operation are cooled, and then the first glass plate and the second glass plate are separated from each other. As described above, in the boundary interface between the ceramic color and the second glass plate, the large-diameter particle on the ceramic color surface functions as a spacer, and therefore the glass frit in the ceramic color is prevented from adhering to the second glass plate and the first glass plate and the second glass plate can be thereby readily separated.

In the laying-up step (f), as the resin for the interlayer film, usable is any known material for use for an interlayer film for a laminated glass. Examples of the interlayer film include olefinic resins, polyvinyl alcohol resins, polyvinyl acetal resins, polyvinyl chloride resins, polyester resins, polyurethane resins, etc. These interlayer films may contain a plasticizer or any ordinary additives exemplified in the section of the ceramic color paste. For the interlayer film, preferred are polyvinyl acetal resins such as polyvinyl formal, polyvinyl butyral and the like (especially polyvinyl butyral resins), from the viewpoint of the excellent transparency, adhesiveness and durability thereof.

The average thickness of the interlayer film is, for example, from 0.1 to 3 mm, preferably from 0.2 to 2 mm, and more preferably from 0.3 to 1.5 mm (especially from 0.5 to 1.2 mm) or so.

In the pressure-bonding step (g), in general, the first glass plate and the second glass plates are bonded under pressure by heating and pressuring the interlayer film. The heating temperature may be selected depending on the type of the binder resin, and for a polyvinyl butyral resin for example, it may be from 80 to 200°C, preferably from 100 to 180°C, and more preferably from 120 to 150°C or so. If desired, any additional pressing may be applied. Via the pressure-bonding step, the first glass plate and the second glass plates are bonded to each other via the interlayer film to give a laminated glass in which the ceramic color exists between the peripheral area of the first glass plate and the interlayer film. In the laminated glass, the large-diameter heat-resistant particle protrudes out of the surface of the ceramic color film, and at least a part of the protrusion formed of the large-diameter particle is embedded in the interlayer film.

The laminated glass of the present invention may have a configuration of two glass plates laminated as described above, or may have a configuration of three or more sheets laminated.

### EXAMPLES

The present invention is described in more detail with reference to the following Examples; however, the present invention is not restricted by these Examples.

### Examples 1 to 33 and Comparative Examples 1 to 5

### [Preparation of Ceramic Color Paste]

As a low-melting-point fusible glass, 70 parts by mass of Bi₂O₃-ZnO-B₂O₃ glass powder (manufactured by Okuno Chemical Industries) having a softening temperature of 510°C and a average particle size of 3.3 µm, as a heat-resistant pigment, 30 parts by mass of copper/chromium/manganese black pigment (manufactured by Dainichiseika Color & Chemicals "Daipyroxide Black #9510) having a average particle size of 0.6 µm, and as an organic vehicle, 35 parts by mass of acrylic resin vehicle (manufactured by Kyoeisha Chemical "Olycox #2218", resin content 35% by mass, solvent: α-terpineol) were mixed in a stirring mixer, and then homogeneously dispersed with a three-roll mill to give a ceramic color paste to be a base. Particle types 1-4, 7 and 8 are not within the scope of the claims.

Further, soda lime glass beads (manufactured by Unitika "UB series", or manufactured by Potters-Ballotini "EMB series", both having a softening temperature of 730°C) or manganese dioxide powder (MnO₂ particles, manufactured by Mitsuwa Chemicals, not softening up to 1000°C) having a different particle size as shown in Tables 1 to 3 were added to the obtained base ceramic color paste, and well mixed and dispersed with a mixer to give a ceramic color paste containing large-diameter particles. In Comparative Example 1, the large-diameter particles were not added. In Tables 1 to 3, the particle size range of the large particles is a value measured according to the screening test method of JIS R6002.

### [Lamination with Ceramic Color Paste]

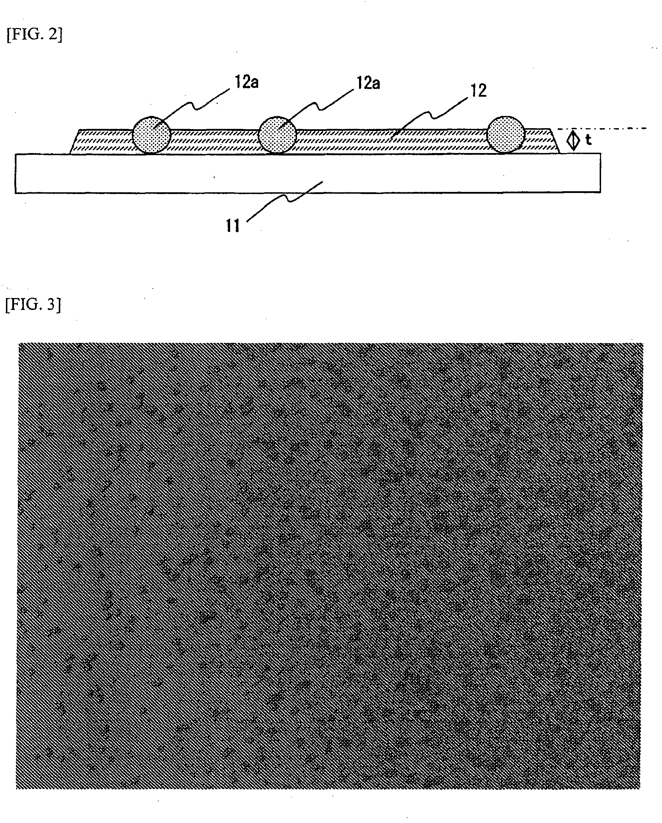

Using a polyester-made screen plate (its mesh size is described in Tables 1 to 3, in which 150 mesh means an opening of 121 µm, 100 mesh means an opening of 204 µm, 70 mesh means an opening of 243 µm), the obtained ceramic color paste was printed in solid in the area of 90 mm × 90 mm on a glass plate (soda glass) having a size of 100 mm × 100 mm × 3 mm thick, and then dried at 150°C for 10 minutes. The thickness of the dried film is shown in Tables 1 to 3. The average thickness of the dried film was determined by measuring the thickness profile by a probe-type film thickness meter and reading the thickness of the area not containing large-diameter particles protruding from the film surface. FIG. 2 is a schematic cross-sectional view of the dried coating film obtained in Examples. As illustrated in FIG. 2, in the dried coating film of the ceramic color paste obtained in Examples, the dried coating film 12 of the ceramic color paste was laminated on the glass plate 11, and the large-diameter particles 12a protruded on the surface of the film. The thickness except the region of the protrusions formed of the large-diameter particles 12a was measured, and as a result, the average thickness of the dried coating film was about 15 µm.

### [Firing on Laminated Glass Plates]

A glass plate (facing glass) having the same size but not printed with a ceramic color was put on the ceramic color-printed and dried glass plate in such a manner that they could sandwich the ceramic color dried film therebetween, put into a furnace at 600°C or 650°C, and heated and fired therein for 5 minutes. After the temperature of the laminated two glasses was restored to around room temperature, the facing glass was separated, and evaluated for the adhesion/transfer, if any, of the ceramic color to the facing glass according to the following criteria.

○: The facing glass was readily separated with neither adhesion nor transfer of the ceramic color to the facing glass.
Δ: The facing glass could be separated, but the ceramic color adhered/transferred to the facing glass.
×: The two glass plates could not be separated at all owing to fusion of the ceramic color.

The results are shown in Tables 1 to 3. The ceramic color film obtained after firing had a good appearance, and the film thickness was 8 µm.

### [Mold Releasability from Pressing Mold (fibrous cloth to cover the surface thereof) in Press Forming]

The ceramic color-printed and dried glass plate was set at the bottom of the pressing mold (forming die) which was set in a heating furnace and coated with heat-resistant glass fibers or stainless cloth (manufactured by Bekaert "KN/Cl (316 L)") on the surface thereof, kept therein at 650°C for 4 minutes, and then pressed so that the glass plate was bent to have a curved shape. The mold releasability of the curved glass plate from the pressing mold (surface coated with the glass fiber cloth) was evaluated according to the following criteria.

○: The glass plate and the pressing mold were separated easily with neither adhesion nor transfer of the ceramic color to the pressing mold.
Δ: The glass plate and the pressing mold could be separated, but the ceramic color adhered/transferred to the pressing mold.
×: Owing to fusion of the ceramic color, the glass plate and the pressing mold could not be separated with ease, and the mold releasability was poor.

The results are shown in Tables 1 to 3.

### [Table 1]

**Table 1**

| Large Particle | | | Comparative Example | Example | | | | | | | | | | | | | | |
|---|---|---|---|---|---|---|---|---|---|---|---|---|---|---|---|---|---|---|
| | | | 1 | 1 | 2 | 3 | 4 | 5 | 6 | 7 | 8 | 9 | 10 | 11 | 12 | 13 | 14 | 15 |
| No. | Material | Particle Size Range (µm) | Amount Added (part by mass) | | | | | | | | | | | | | | | |
| Particle 1 | glass | 10-20 | - | 0.1 | 1 | 5 | 15 | 30 | - | - | - | - | - | - | - | - | - | - |
| Particle 2 | | 10-38 | - | - | - | - | - | - | 0.1 | 1 | 5 | 15 | 30 | - | - | - | - | - |
| Particle 3 | | 38-53 | - | - | - | - | - | - | - | - | - | - | - | 0.1 | 1 | 5 | 15 | 30 |
| Particle 4 | | 63-106 | - | - | - | - | - | - | - | - | - | - | - | - | - | - | - | - |
| Particle 5 | | 125-180 | - | - | - | - | - | - | - | - | - | - | - | - | - | - | - | - |
| Particle 6 | | 180-240 | - | - | - | - | - | - | - | - | - | - | - | - | - | - | - | - |
| Particle 7 | | 2-10 | - | - | - | - | - | - | - | - | - | - | - | - | - | - | - | - |
| Particle 8 | MnO₂ | 25-50 | - | - | - | - | - | - | - | - | - | - | - | - | - | - | - | - |
| Screen Plate (mesh size) | | | 150 | 150 | 150 | 150 | 150 | 150 | 150 | 150 | 150 | 150 | 150 | 150 | 150 | 150 | 150 | 150 |
| Dried Film Thickness (µm) | | | 15 | 15 | 15 | 15 | 15 | 15 | 15 | 15 | 15 | 15.5 | 15.4 | 15 | 15.3 | 15 | 15.3 | 15.5 |
| Laminated Glass | | firing at 600°C | × | Δ | ○ | ○ | ○ | ○ | Δ | ○ | ○ | ○ | ○ | Δ | ○ | ○ | ○ | ○ |
| | | firing at 650°C | × | Δ | ○ | ○ | ○ | ○ | Δ | ○ | ○ | ○ | ○ | Δ | ○ | ○ | ○ | ○ |
| Bending by Pressing | | firing at 650°C | × | Δ | ○ | ○ | ○ | ○ | Δ | ○ | ○ | ○ | ○ | ○ | ○ | ○ | ○ | ○ |

### [Table 2]

**Table 2**

| Large Particle | | | Example | | | | | | | | | | | | |
|---|---|---|---|---|---|---|---|---|---|---|---|---|---|---|---|
| | | | 16 | 17 | 18 | 19 | 20 | 21 | 22 | 23 | 24 | 25 | 26 | 27 | 28 |
| No. | Material | Particle Size Range (µm) | Amount Added (part by mass) | | | | | | | | | | | | |
| Particle 1 | glass | 10-20 | - | - | - | - | - | - | - | - | - | - | - | - | - |
| Particle 2 | | 10-38 | - | - | - | - | - | - | - | - | - | - | - | - | - |
| Particle 3 | | 38-53 | - | - | - | - | - | - | - | - | - | - | - | - | - |
| Particle 4 | | 63-106 | 0.1 | 1 | 5 | 15 | 30 | - | - | - | - | - | - | - | - |
| Particle 5 | | 125-180 | - | - | - | - | - | 0.1 | 1 | 5 | 15 | - | - | - | - |
| Particle 6 | | 180-240 | - | - | - | - | - | - | - | - | - | 0.1 | 1 | 5 | 15 |
| Particle 7 | | 2-10 | - | - | - | - | - | - | - | - | - | - | - | - | - |
| Particle 8 | MnO₂ | 25-50 | - | - | - | - | - | - | - | - | - | - | - | - | - |
| Screen Plate (mesh size) | | | 150 | 150 | 150 | 150 | 100 | 100 | 100 | 100 | 100 | 70 | 70 | 70 | 70 |
| Dried Film Thickness (µm) | | | 15 | 15 | 15.4 | 15.5 | 15.5 | 15 | 15 | 15 | 15 | 15 | 15 | 15 | 15 |
| Laminated Glass | | firing at 600°C | ○ | ○ | ○ | ○ | ○ | ○ | ○ | ○ | ○ | ○ | ○ | ○ | ○ |
| | | firing at 650°C | ○ | ○ | ○ | ○ | ○ | ○ | ○ | ○ | ○ | ○ | ○ | ○ | ○ |
| Bending by Pressing | | firing at 650°C | ○ | ○ | ○ | ○ | ○ | ○ | ○ | ○ | ○ | ○ | ○ | ○ | ○ |

### [Table 3]

**Table 3**

| Large Particles | | | Comparative Example | | | | Example | | | | |
|---|---|---|---|---|---|---|---|---|---|---|---|
| | | | 2 | 3 | 4 | 5 | 29 | 30 | 31 | 32 | 33 |
| No. | Material | Particle Size Range (µm) | Amount Added (part by mass) | | | | | | | | |
| Particle 1 | glass | 10-20 | - | - | - | - | - | - | - | - | - |
| Particle 2 | | 10-38 | - | - | - | - | - | - | - | - | - |
| Particle 3 | | 38-53 | - | - | - | - | - | - | - | - | - |
| Particle 4 | | 63-106 | - | - | - | - | - | - | - | - | - |
| Particle 5 | | 125-180 | - | - | - | - | - | - | - | - | - |
| Particle 6 | | 180-240 | - | - | - | - | - | - | - | - | - |
| Particle 7 | | 2-10 | 0.1 | 1 | 5 | 15 | - | - | - | - | - |
| Particle 8 | MnO₂ | 25-50 | - | - | - | - | 0.1 | 1 | 5 | 15 | 30 |
| Screen Plate (mesh size) | | | 150 | 150 | 150 | 150 | 150 | 150 | 150 | 150 | 150 |
| Dry Film Thickness (µm) | | | 15 | 15 | 15 | 15 | 15 | 15 | 15 | 15.5 | 15.3 |
| Laminated Glass | | firing at 600°C | × | × | × | Δ | Δ | ○ | ○ | ○ | ○ |
| | | firing at 650°C | × | × | × | × | Δ | ○ | ○ | ○ | ○ |
| Bending by Pressing | | firing at 650°C | × | × | Δ | Δ | Δ | ○ | ○ | ○ | ○ |

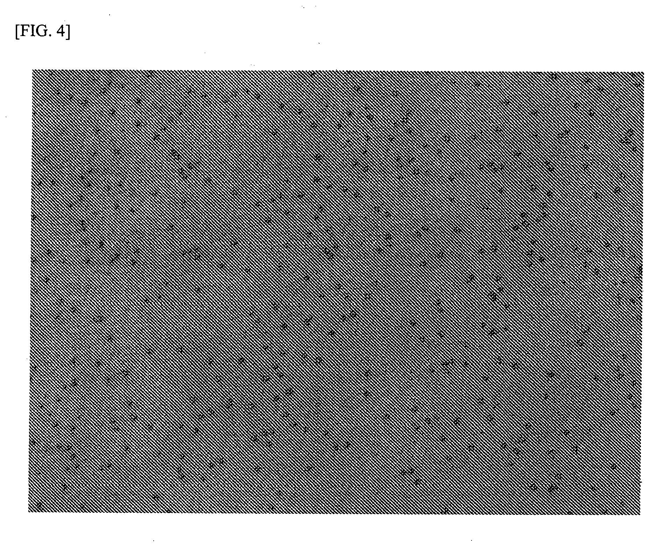

From the results in Tables 1 to 3, it is readily confirmed that, in the dried film of the ceramic color paste, to which any of the particles 1 and 2 containing large-diameter particles having a particle size larger than the thickness of the dried coating film (average thickness of 15 µm or so) in their particles size range or the particles 3 to 6 and 8 composed of the large-diameter particles had been added, the large-diameter particles protruded out from the dried film as seen from the film thickness profile and the microscope photographs. A microscope photograph (15-fold magnification) of the dried coating film surface in Example 14 is shown in FIG. 3. Regarding the ceramic color film to which these large-diameter particles had been added, in the laminated glass, the two laminated glass plates after fired did not cause adhesion to each other and could be readily separated. Further in press forming, the glass plate could be readily separated from the coating fibrous cloth material with neither adhesion nor transfer of the ceramic color after firing and forming. A microscope photograph (15-fold magnification) of the surface of the separated ceramic color film in Example 14 is shown in FIG. 4.

On the other hand, in the case where large-diameter particles were not added (Comparative Example 1), in the laminated glass, the two glass plates completely bonded to each other via the black ceramic therebetween after fired, and could not be separated. Further in press forming, the glass plate adhered to the pressing mold after firing and bending and forming.

In the case where the particles 7 not containing large-diameter particles thicker than the dried coating film but being smaller than the thickness of the dried coating film (particle size range was from 2 to 10 µm and the average particle size was 5 µm), there are no particles capable of protruding out of the dried coating film with a thickness of 15 µm, and as compared with the case of Comparative Example 1 in which large-diameter particles were not added, the degree of adhesion of the two glass plates and the mold releasability thereof from the pressing mold could be improved in some degree; however, the peelability was deteriorated and, in particular, in the laminated glass of firing at a temperature of 650°C, the two glass pates could not be separated.

### Examples 34 to 37

A ceramic color paste was prepared in the same manner as in Example 13 except that the blend ratio of the low-melting-point glass 1 and the heat-resistant pigment was changed as shown in Table 4, and printing on a glass plate, firing in laminated glass, and forming by pressing were conducted.

### Example 38

A ceramic color paste was prepared in the same manner as in Example 13 except that the low-melting-point glass 2 (ZnO-B₂O₃-RO-R₂O glass powder, manufactured by Okuno Chemical Industries, having a softening temperature of 530°C and a average particle size of 2.5 µm) was used in place of the low-melting-point glass 1, and printing on a glass plate, firing in laminated glass, and forming by pressing were conducted.

The results of Examples 34 to 38 are shown in Table 4 along with the results of Example 13.

### [Table 4]

**Table 4**

| | | Example | | | | | |
|---|---|---|---|---|---|---|---|
| | | 13 | 34 | 35 | 36 | 37 | 38 |
| Composition (part by mass) | low-melting-point glass 1 | 70 | 50 | 60 | 80 | 90 | - |
| | low-melting-point glass 2 | - | - | - | - | - | 70 |
| | heat-resistant pigment | 30 | 50 | 40 | 20 | 10 | 30 |
| | large particle 3 (glass, particle size 38 to 53 µm) | 5 | 5 | 5 | 5 | 5 | 5 |
| Screen Plate (mesh size) | | 150 | 150 | 150 | 150 | 150 | 100 |
| Dried Film Thickness (µm) | | 15 | 16 | 16 | 15 | 15 | 15 |
| Laminated Glass Plates | fired at 600°C | ○ | ○ | ○ | ○ | ○ | ○ |
| | fired at 650°C | ○ | ○ | ○ | ○ | ○ | ○ |
| Bending by Pressing | fired at 650°C | ○ | ○ | ○ | ○ | ○ | ○ |

From the results in Examples 34 to 37 in Table 4, it is confirmed that the large-diameter particles are effective for preventing adhesion, irrespective of the blending ratio of the low-melting-point glass 1 and the heat-resistant pigment. In the case where the blending ratio of the low-melting-point glass 1 and the heat-resistant pigment is 50/50, the degree of blackness of the fired film somewhat lowered since the amount of the low-melting-point glass 1 was small. On the other hand, in the case where the blending ratio of the low-melting-point glass 1 and the heat-resistant pigment is 90/10, the masking performance of the fired film somewhat lowered since the amount of the heat-resistant pigment was small.

From the results in Example 38, it is confirmed that the large-diameter particle is still effective for preventing adhesion, even though the type of the low-melting-point glass is changed.

From the results in these Examples, it is known that the present invention has attained prevention of adhesion owing to the spacer effect of the large-diameter particle and that, therefore, the present invention secures the effect under broad-range conditions without being influenced by the constituent components of the ceramic color to be the base and by the working temperature for bent glass.

### INDUSTRIAL APPLICABILITY

The ceramic color paste of the present invention can be used as a paste for forming a ceramic color of various glass plates, and in particular, can be used for a laminated glass having a curved shape. Examples of the laminated glass usable include windowpanes for vehicles or transport aircrafts such as trains, cars, airplanes, airships, ships, etc., and for security glass for buildings, etc., and in particular, it is useful for windowpanes (windshields, rear glasses, side glasses, etc.) for automobiles having a curved shape.

### REFERENCE SIGNS LIST

- 1, 4: Glass Plate
- 2: Ceramic Color Paste
- 3: Dried Coating Film of Ceramic Color Paste
- 5: Ceramic Color
- 6: Interlayer Film

## Claims

1. A ceramic color paste comprising a glass frit, a vehicle, a heat-resistant pigment and a large-diameter heat-resistant particle, wherein the large-diameter heat-resistant particle has an isotropic shape, a particle size larger than an average thickness of a dried coating film for forming a ceramic color and a maximum particle size of 80 µm to 300 µm.

2. The ceramic color paste according to claim 1, wherein the large-diameter heat-resistant particle comprises a particle having a particle size of from 1.2 to 20 times the average thickness of the dried coating film for forming the ceramic color.

3. The ceramic color paste according to claim 1 or 2, wherein the large-diameter heat-resistant particle has a proportion of from 0.1 to 30 parts by mass relative to 100 parts by mass of a total of the glass frit and the heat-resistant pigment.

4. The ceramic color paste according to any of claims 1 to 3, wherein the large-diameter heat-resistant particle is formed of a metal oxide.

5. The ceramic color paste according to any of claims 1 to 3, wherein the large-diameter heat-resistant particle is formed of a glass.

6. The ceramic color paste according to any of claims 1 to 5, wherein the large-diameter heat-resistant particle is nearly spherical.

7. The ceramic color paste according to any of claims 1 to 6, wherein the large-diameter heat-resistant particle has a melting point or a softening point higher than a firing temperature of the ceramic color paste.

8. A ceramic color produced by firing the ceramic color paste according to any of claims 1 to 7.

9. The ceramic color-attached glass comprising a glass plate having a curve shape and a ceramic color film formed of the ceramic color according to claim 8, and laminated on at least a part of at least one surface of the glass plate.

10. The ceramic color-attached glass according to claim 9, wherein the large-diameter heat-resistant particle protrudes from the surface of the ceramic color film.

11. A ceramic color-attached laminated glass comprising at least two glass plates bonded under pressure via an interlayer film formed of a resin, wherein at least one of the glass plates is the ceramic color-attached glass plate according to claim 10.

12. The ceramic color-attached laminated glass according to claim 11, wherein at least a part of a portion at which the large-diameter heat-resistant particle protrudes is embedded in the interlayer film.

## Patentansprüche

1. Keramische Farbpaste, umfassend eine Glasfritte, einen Träger, ein wärmebeständiges Pigment und ein wärmebeständiges Teilchen mit großem Durchmesser, wobei das wärmebeständige Teilchen mit großem Durchmesser eine isotrope Form, eine Teilchengröße, größer als eine mittlere Dicke eines getrockneten Beschichtungsfilms zum Bilden einer keramischen Farbe und eine maximale Teilchengröße von 80 µm bis 300 µm aufweist.

2. Keramische Farbpaste nach Anspruch 1, wobei das wärmebeständige Teilchen mit großem Durchmesser ein Teilchen mit einer Teilchengröße des 1,2- bis 20-fachen der mittleren Dicke des getrockneten Beschichtungsfilms zum Bilden der keramischen Farbe umfasst.

3. Keramische Farbpaste nach Anspruch 1 oder 2, wobei das wärmebeständige Teilchen mit großem Durchmesser einen Anteil von 0,1 bis 30 Massenteilen, bezogen auf 100 Massenteile einer Gesamtheit der Glasfritte und des wärmebeständigen Pigments, ausmacht.

4. Keramische Farbpaste nach einem der Ansprüche 1 bis 3, wobei das wärmebeständige Teilchen mit großem Durchmesser aus einem Metalloxid gebildet ist.

5. Keramische Farbpaste nach einem der Ansprüche 1 bis 3, wobei das wärmebeständige Teilchen mit großem Durchmesser aus einem Glas gebildet ist.

6. Keramische Farbpaste nach einem der Ansprüche 1 bis 5, wobei das wärmebeständige Teilchen mit großem Durchmesser annähernd kugelförmig ist.

7. Keramische Farbpaste nach einem der Ansprüche 1 bis 6, wobei das wärmebeständige Teilchen mit großem Durchmesser einen Schmelzpunkt oder einen Erweichungspunkt, der höher als eine Brenntemperatur der keramischen Farbpaste ist, aufweist.

8. Keramische Farbe, hergestellt durch Brennen der keramischen Farbpaste nach einem der Ansprüche 1 bis 7.

9. Glas mit daran haftender keramischer Farbe, umfassend eine Glasplatte mit einer Kurvenform und einem keramischen Farbfilm, gebildet aus der keramischen Farbe nach Anspruch 8 und laminiert auf mindestens einem Teil von mindestens einer Oberfläche der Glasplatte.

10. Glas mit daran haftender keramischer Farbe nach Anspruch 9, wobei das wärmebeständige Teilchen mit großem Durchmesser aus der Oberfläche des keramischen Farbfilms ragt.

11. Laminiertes Glas mit daran haftender keramischer Farbe, umfassend mindestens zwei Glasplatten, aneinander gebunden unter Druck mittels eines Zwischenschicht-Films, gebildet aus einem Harz, wobei mindestens eine der Glasplatten die Glasplatte mit daran haftender keramischer Farbe nach Anspruch 10 ist.

12. Laminiertes Glas mit daran haftender keramischer Farbe nach Anspruch 11, wobei mindestens ein Teil eines Abschnitts, in dem das wärmebeständige Teilchen mit großem Durchmesser hervorragt, in dem Zwischenschicht-Film eingebettet ist.

## Revendications

1. Pâte céramique de couleur comprenant une fritte de verre, un véhicule, un pigment résistant à la chaleur et une particule résistant à la chaleur de grand diamètre, dans laquelle la particule résistant à la chaleur de grand diamètre a une forme isotrope, une taille de particule plus grande qu'une épaisseur moyenne d'un film de revêtement séché pour former une céramique de couleur et une taille de particule maximale de 80 µm à 300 µm.

2. Pâte céramique de couleur selon la revendication 1, dans laquelle la particule résistant à la chaleur de grand diamètre comprend une particule ayant une taille de particule de 1,2 à 20 fois l'épaisseur moyenne du film de revêtement séché pour former la céramique de couleur.

3. Pâte céramique de couleur selon la revendication 1 ou 2, dans laquelle la particule résistant à la chaleur de grand diamètre a une proportion de 0,1 à 30 parties en masse par rapport à 100 parties en masse d'un total de la fritte de verre et du pigment résistant à la chaleur.

4. Pâte céramique de couleur selon l'une quelconque des revendications 1 à 3, dans laquelle la particule résistant à la chaleur de grand diamètre est formée d'un oxyde métallique.

5. Pâte céramique de couleur selon l'une quelconque des revendications 1 à 3, dans laquelle la particule résistant à la chaleur de grand diamètre est formée d'un verre.

6. Pâte céramique de couleur selon l'une quelconque des revendications 1 à 5, dans laquelle la particule résistant à la chaleur de grand diamètre est quasiment sphérique.

7. Pâte céramique de couleur selon l'une quelconque des revendications 1 à 6, dans laquelle la particule résistant à la chaleur de grand diamètre a un point de fusion ou un point de ramollissement supérieur à une température de cuisson de la Pâte céramique de couleur.

8. Céramique de couleur produite par la cuisson de la pâte céramique de couleur selon l'une quelconque des revendications 1 à 7.

9. Verre fixé à une céramique de couleur comprenant une plaque en verre ayant une forme de courbe et un film céramique de couleur formé de la céramique de couleur selon la revendication 8, et feuilleté sur au moins une partie d'au moins une surface de la plaque en verre.

10. Verre fixé à une céramique de couleur selon la revendication 9, dans lequel la particule résistant à la chaleur de grand diamètre dépasse de la surface du film céramique de couleur.

11. Verre feuilleté fixé à une céramique de couleur comprenant au moins deux plaques en verre liées sous pression via un film intercalaire formé d'une résine, dans lequel au moins l'une des plaques en verre est la plaque en verre fixée à la céramique de couleur selon la revendication 10.

12. Verre feuilleté fixé à une céramique de couleur selon la revendication 11, dans lequel au moins une partie d'une portion au niveau de laquelle la particule résistant à la chaleur de grand diamètre dépasse est incorporée dans le film intercalaire.
